# EUROPEAN PATENT APPLICATION

(11) **EP 0 678 430 A1**
(43) Date of publication of application: **25.10.1995**
(21) Application number: 95105872.6
(22) Date of filing: 19.04.1995
(51) Int. Cl.: B60S 9/14

(54) **Device for moving a car in confined spaces**

(30) Priority: 22.04.1994 IT MN940014
(71) Applicant: Veronesi, Bruno, I-46030 Sustinente (Mantova) (IT)
(72) Inventor: Veronesi, Bruno, I-46030 Sustinente (Mantova) (IT)
(74) Representative: Modiano, Guido, Dr.-Ing.

(57) **Abstract**

A device for moving a car (3) in confined spaces, characterized in that it comprises two rolling bodies (9a,10a) having parallel axes and connected to a structure (6) that is associated with the car so that it is rotatable about an axis that lies at right angles to the underside and passes through the center of gravity of the car; the structure is provided with means (9b,10b) for moving the rolling bodies (9a,10a) from a position in which they are adjacent to the underside and comprised within the bulk of the car (3) to a position in which the rolling bodies are in contact with the ground and lift the wheels of the car from the ground.

## Description

The present invention relates to a device for moving a car in confined spaces.

It is known that car users may have to park their car within confined spaces: this circumstance leads to a large number of maneuvers that are certainly not pleasant and often fully prevents parking, perhaps after fruitless attempts.

The aim of the present invention is to provide a device for moving a car in confined spaces that, when applied to the car, makes it easy to park it even in generally inaccessible spaces.

Within the scope of the proposed aim, an object of the invention is to provide a device that allows car maintenance operations and tire changing.

This aim and this object are achieved by a device for moving a car in confined spaces, according to the invention, characterized in that it comprises two rolling bodies having parallel axes and connected to a structure that is associated with the car so that it is rotatable about an axis that lies at right angles to the underside and passes through the center of gravity of said car, said structure being provided with means for moving said rolling bodies from a position in which they are adjacent to the underside and comprised within the volume of the car to a position in which said rolling bodies are in contact with the ground and lift the wheels of the car from the ground.

Further characteristics and advantages will become apparent from the description of two preferred but not exclusive embodiments of the invention, illustrated only by way of non-limitative example in the accompanying drawings, wherein:
figure 1 is a perspective view of the device, with the rollers in contact with the ground;
figure 2 is a schematic side view of the device in the position shown in figure 1;
figure 3 is another perspective view of the device, with the rollers shown in solid lines in the position in which they are adjacent to the underside of the car and in dot-and-dash lines in the position in which they are in contact with the ground;
figure 4 is a view of a first different embodiment of the invention;
figure 5 is a schematic view of the possibilities of moving a car allowed by the device;
figures 6 and 7 illustrate ways of using the device.

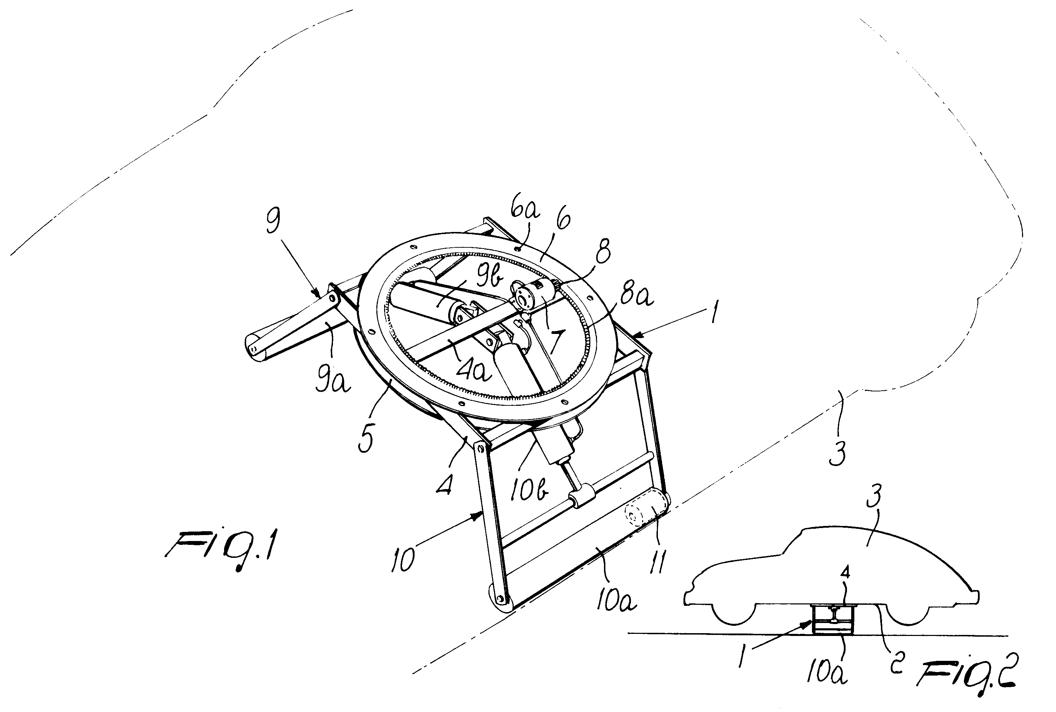

With reference to the above figures 1, 2, and 3, the reference numeral 1 generally designates the device according to the invention, which is applied to the underside 2 of a car 3.

Said device comprises the frame 4, which is rigidly fixed to the ring 5 of a swivel bearing, the other ring 6 whereof is rigidly coupled to the underside 2 of the car 3 by means of bolts that pass in holes such as 6a; an electric motor 7 is powered by the electric system of the car, can be operated by controls provided on the dashboard of said car or by remote control, is fixed to the cross-member 4a of the frame 4, and rotates the pinion 8, which meshes with the crown wheel 8a, which is rigidly coupled to the ring 6 of the swivel bearing.

The rotation axis of the swivel bearing is at right angles to the underside 2 of the car and passes through the center of gravity of said car.

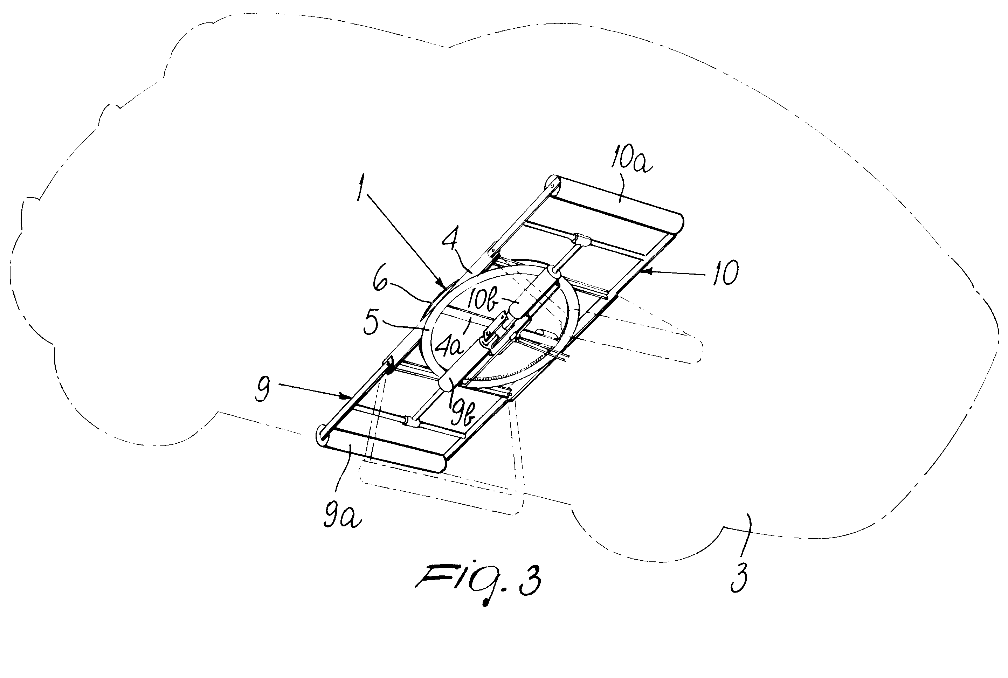

The two arms 9 and 10 are pivoted on the frame 4 and respectively support rolling bodies provided by means of the rollers 9a and 10a; said arms are connected to the actuation cylinders 9b and 10b so as to be movable between two extreme positions: a first position, shown in figures 1 and 2 and in dot-and-dash lines in figure 3, in which the rollers 9a and 10a are in contact with the ground and lift the wheels of the car 3 from the ground; and a second position, shown in figure 3 in solid lines, in which the rollers are adjacent to the underside 2 of the car 3 and contained within the bulk of the car.

The reference numeral 11 furthermore designates an electric motor adapted to move the roller 10a and powered by the electric circuit of the car; the actuation of said motor 11, as well as of the actuation cylinders 9b and 10b, can be performed, as mentioned with regard to the motor 7, both by controls provided on the dashboard of the car and by remote control.

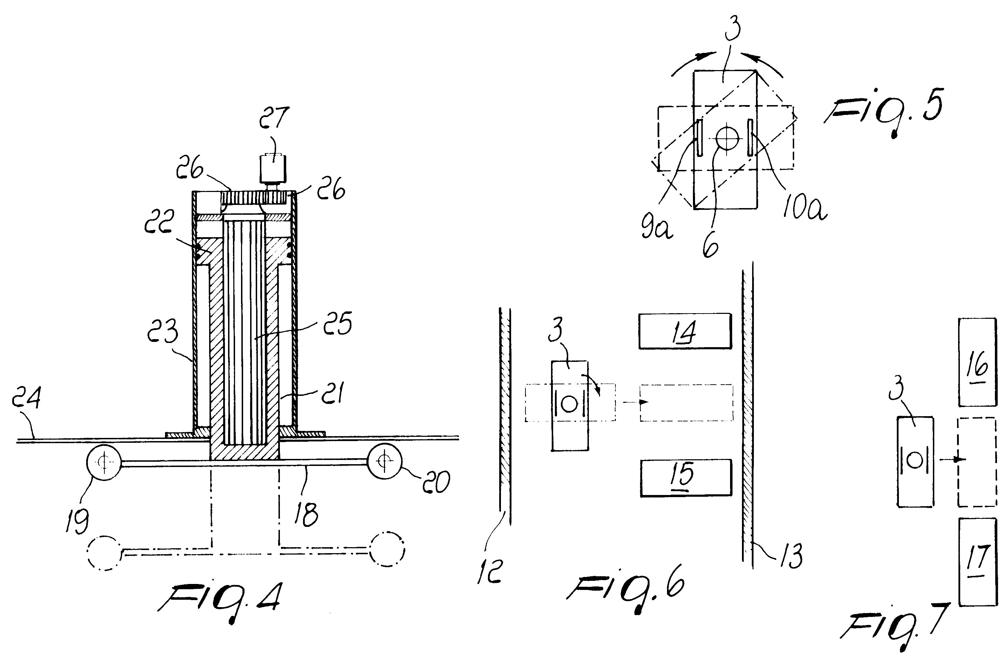

The position of the rollers 9a and 10a adjacent to the underside 2 of the car 3, shown in solid lines in figure 3, is the one assumed during normal use of the car, since in this position, in which it is raised from the ground and lies within the bulk of the car, said rollers do not interfere at all with the movement of the car. In the position in which the rollers 9a and 10a are lowered in contact with the ground, shown in figures 1 and 2, the degree of rotational freedom in both directions provided by the presence of the swivel bearing, which is formed by the rings 5 and 6 and is arranged within the supporting structure of said rollers, allows to make the car 3 assume any position with respect to said structure, said car being raised from the ground; this circumstance is clearly shown by the diagram of figure 5, in which the car 3 is shown in three different positions that can be assumed with respect to the rollers 9a and 10a that rest on the ground; a position shown in solid lines, in which the longitudinal axis is parallel to said rollers; a position shown with dot-and-dash lines, in which the longitudinal axis is inclined with respect to said rollers; and finally a position, shown in dashed lines, in which the longitudinal axis lies at right angles to the rollers.

This fact allows infinite possibilities for moving the car in confined spaces, as often occurs in parkings; two examples thereof are now provided.

A first example is described with reference to figure 6; car 3 reaches the narrow lane delimited by the walls 12 and 13 and must park between cars 14 and 15.

After placing the rollers 9a and 10a in contact with the paving of the lane, first of all the motor 7 is used to rotate the car, by taking advantage of the presence of the swivel bearing, so as to move the car into the position shown in dot-and-dash lines; once this position has been reached, the motor 11 is activated, causing the rotation of the roller 10a, and the car 3 performs a translatory motion into the desired position, shown in dashed lines.

A second example is shown in figure 7: car 3 must park between cars 16 and 17, which are mutually spaced by an extent that is substantially equal to the length of the car proper.

This time it is simply sufficient to lower the rollers 9a and 10a until they make contact with the ground and then actuate the motor 11 to cause the translatory motion of the car into the desired position, shown in dashed lines.

Figure 4 illustrates a different embodiment of the invention, which comprises the plate 18 that supports the rollers 19 and 20, one of which is motorized; the plate is connected to the stem 21 of the piston 22 of the actuation cylinder 23, which is fixed to the underside 24 of a car and is thus located inside the cabin thereof.

The shaft 25 is accommodated within the stem 21 so that it is axially slideable and cannot rotate because of its splined profile, and is rotated, by virtue of the pair of gears 26, by the motor 27, which is supported so that it is rigidly coupled to the cylinder 23.

The movements of the piston 22 cause upward and downward movements of the plate 18 between the positions shown in solid lines and with dot-and-dash lines, in which it is adjacent to the underside 24 of the car and, respectively, its rollers 19 and 20 are in contact with the ground.

The rotation of the cylinder 23, and accordingly of the car to which the cylinder is connected by coupling to the underside 24, is provided by actuating the motor 27.

From the foregoing, it is evident that the device according to the invention is capable of moving a car so as to allow it to fit in spaces that would otherwise be inaccessible thereto, but other functional features of the invention also become apparent: the device can facilitate maintenance operations of the car to which it is applied and the changing of the tires thereof; anti-theft functions are not excluded.

The described invention is susceptible of numerous modifications and variations, all of which are within the scope of the inventive concept: thus, for example, the rollers 9a and 10a might be replaced with wheels or with belts of any material; the electric motors may furthermore be replaced with hydraulic motors, but they may also be omitted if manual operation is sought.

The movement of the arms 9 and 10 can also be provided by virtue of any means, for example with a single actuation cylinder or with a purely mechanical system.

Advantageously, it is also possible to provide, at the four corners of the car, sensors adapted to indicate the degree of optimum approach to obstacles during maneuvers.

In the practical embodiment of the invention, the materials employed, as well as the shapes and the dimensions, may be any according to the requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Device for moving a car in confined spaces, characterized in that it comprises two rolling bodies having parallel axes and connected to a structure that is associated with the car so that it is rotatable about an axis that lies at right angles to the underside and passes through the center of gravity of said car, said structure being provided with means for moving said rolling bodies from a position in which they are adjacent to the underside and comprised within the volume of the car to a position in which said rolling bodies are in contact with the ground and lift the wheels of the car from the ground.

2. Device according to claim 1, characterized in that at least one of the rolling bodies is motorized.

3. Device according to claim 1, characterized in that the structure is provided with motorization means adapted to cause its rotation about the axis that lies at right angles to the underside and passes through the center of gravity of the car.

4. Device according to one or more of the preceding claims, characterized in that the rolling bodies are provided in the form of rollers.

5. Device according to one or more of the preceding claims, characterized in that the rolling bodies are provided in the form of wheels.

6. Device according to one or more of the preceding claims, characterized in that the rolling bodies are provided in the form of belts.

7. Device according to one or more of the preceding claims, characterized in that it comprises: a frame that is rigidly fixed to a ring of a swivel bearing, the other ring whereof is rigidly coupled to the underside of the car outside the cabin; two arms for supporting the rolling bodies, which are pivoted to said frame; means adapted to cause the rotation of the swivel bearing; and means for causing the rotation of the supporting arms of the rolling bodies between the position in which the rolling bodies are adjacent to the underside and the position in which they are in contact with the ground, lifting the wheels of the car from the ground.

8. Device according to one or more of the preceding claims, characterized by the presence of: a motor that actuates one of the two rolling bodies; a motor that is fixed on the frame, is rigidly coupled to a ring of the swivel bearing, and drives a pinion that meshes with a crown wheel rigidly coupled to the other ring of said swivel bearing; and of an actuation cylinder for each one of the supporting arms of the rolling bodies, said cylinder being adapted to cause the rotation of said arms.

9. Device according to one or more of the preceding claims, characterized in that it comprises a plate for supporting the rolling bodies that is connected to the stem of the piston of an actuation cylinder fixed to the underside of the car, said stem internally accommodating a shaft so that it is axially slideable and cannot rotate, said shaft being provided with means for rotating it that draw their motion from a motor that is supported so that it is rigidly coupled to the actuation cylinder.

10. Device according to one or more of the preceding claims, characterized in that it comprises sensors at the four corners of the car, said sensors being adapted to indicate the degree of optimum approach of the car to obstacles during maneuvers
